# EUROPEAN PATENT APPLICATION

(11) **EP 1 746 037 A1**
(43) Date of publication of application: **24.01.2007**
(21) Application number: 05425539.3
(22) Date of filing: 22.07.2005
(51) Int. Cl.: B65D 39/00

(54) **Stopper for bottle for wine and similar drinks and process for production of said stopper**

(71) Applicant: Microcell S.r.L., 36028 Rossano Veneto VI (IT)
(72) Inventor: Casini, Roberto, 20145 Milano (IT); Bianchi, Sauro, 22020 Cavallasca (Como) (IT)
(74) Representative: Lunati, Vittoriano

(57) **Abstract**

A stopper (1) for bottles for wine and similar drinks comprising an outer coating (2) and an inner element (3) is described, and in which the outer coating (2) consists of a first thermoplastic polymeric material (2a) which entirely covers the inner element (3), while the inner element (3) is made of a second foamed semi-crystalline polymeric material (3a), the synthetic stopper (1) being produced by coinjection moulding process.

## Description

The present invention relates to a stopper for bottle for wine and similar drinks and a process for the production of said stopper, as specified in the preamble of the first claim.

As it is known, different types of stoppers for bottle for wine and similar drinks currently exist.

Stoppers for wine must have specific physical and chemical characteristics to permit correct ageing of the wine and prevent alteration of the taste and bouquet of the wine.

In particular the stoppers in question must permit: reduced permeability to gases due both to the chemical and morphological characteristics of the material constituting the stopper and to the mechanical characteristics of the latter, uniform performance in the long term, maintenance of the characteristics from stopper to stopper and, lastly, ease of extraction.

The best-known and most widely used types of stoppers for wine are substantially cylindrical stoppers which are fully inserted into the bottleneck. Said stoppers adhere to the bottle by means of the reaction that develops between the stopper and the bottleneck generated by compression of said stoppers.

For the extraction of these types of stoppers, corkscrews are used which grasp the stopper via the insertion of a helical screw.

Said cylindrical stoppers are commonly made of one single material, i.e. natural cork.

Natural cork, if kept moist by storing the bottles in a horizontal position, has suitable physical-mechanical characteristics. This material, in fact, has a high elasticity, which permits radial compression during insertion into the bottleneck so that, once inserted, the compressed cork exerts an elastic return thrust causing close adhesion between the cork and the bottleneck.

Natural cork also has good impermeability to gases.

These characteristics of natural cork are maintained in the long term and therefore prevent rapid deterioration of the product contained in the bottle due mainly to the permeation of oxygen from the outside towards the inside of the bottle.

Alongside the advantages referred to, cylindrical corks have some important drawbacks.

One drawback of corks is that there is a possible alteration in the flavour of the wine due in particular to mould contained in the cork or to the cork itself, a material of vegetable origin.

Furthermore corks do not guarantee uniform mechanical characteristics and therefore the evolution of the wines can be different from bottle to bottle due to different radial seals.

Said non-uniformity of the physical-mechanical characteristics of corks results in occasional breakages of the corks during extraction with the possibility of fragments of cork dropping into the wine.

Last but not least is the drawback that said corks have a high production cost and a high raw material cost, due in particular to the increasing difficulty in locating supplies of cork.

An alternative to the use of natural corks is the use of sintered corks, produced by the agglomeration of natural cork dust with synthetic adhesives.

This type of cork solves, at least partially, the problems connected with uniformity of the physical-mechanical characteristics of the corks, but the drawbacks connected with possible organoleptic alteration of the wine remain.

To solve the problems relating to alteration of the flavour and bouquet due to the use of natural or agglomerated cork there have been attempts to use stoppers made of polymeric materials.

The appropriate physical-mechanical characteristics are found in particular in foamed polymers which are able to guarantee a correct mechanical response. In fact, they can withstand high elastic deformation without undergoing permanent deformation, bending or breaking, and they therefore behave excellently at the interface between the stopper and the glass bottleneck.

Synthetic stoppers can also guarantee uniform characteristics from stopper to stopper.

The use of a thermoplastic polymeric material with high elastic characteristics or reduced slackening of force in the long term has the drawback, however, of generally having poor gas barrier properties. The use of synthetic stoppers of known technology for keeping wine for periods exceeding 24 months, therefore, does not provide an adequate barrier either to the penetration of oxygen inside the bottle or to the possible leakage of gas and absorption of the bouquet from the inside towards the outside of the bottle, with consequent deterioration of the drink and alteration of its organoleptic characteristics. Furthermore plasticizing substances are often added to said thermoplastic materials with high elasticity. Said substances can be incompatible both with the need for neutrality, since they can be easily transferred to the drink, and printability of the graphics necessary for customisation of the product.

To remedy the drawbacks referred to, stoppers have been produced in which the lateral surface is coated with a layer of different material.

These types of stoppers can be produced by means of different processes such as: gluing of a strip on the lateral surface, insertion of a tubular element on the outside, extrusion of two materials simultaneously etc.

In this case it is the lateral surface that comes into contact with the bottleneck.

This embodiment solves the problems connected with the printing of graphics by adopting a suitable material for the surface, and also permits the creation of surfaces that are pleasant to touch, look good and are non-foamed (therefore more uniform) in order to guarantee improved adhesion to the walls of the bottle.

Different types of stoppers have therefore been developed in accordance with said precept. Thus tubular elements of different materials have been coupled with synthetic stoppers or stoppers made of natural or agglomerated cork.

Nevertheless these stoppers do not solve the problems of transfer of gas and absorption of flavours inside the bottle via the material, and furthermore do not solve the problems of contact of the drink with non-neutral materials: the material that substantially forms the stopper and which must have the mechanical characteristics specified above is exposed on the bottom of the stopper and therefore remains in contact with the wine or the drink.

A last type of stopper is described in EP 0 496 194.

This patent describes a stopper in which the component material, cork or synthetic materials, is partially or completely coated in a film of non-toxic foamed polystyrene, suitable for use with food, having the same appearance and colour as natural cork. However, this embodiment does not guarantee perfect adhesion of the body to the film, so that it can give rise to problems of bending, distortion and breakage of the surface layer during corking and uncorking.

Furthermore this stopper has high production costs. In fact, this stopper has to be produced in two successive phases: one first phase for producing the inner part, analogous to the phase for production of traditional corks or synthetic stoppers, and a second phase for coating said element, which is performed according to various known processes. Said processes are therefore slow and financially disadvantageous.

In this situation the technical aim of the present invention is to devise a stopper for bottles of wine and similar drinks able to substantially remedy the above-mentioned drawbacks.

Within said technical aim an important task of the invention is to produce a synthetic stopper that does not alter the bouquet and flavour of the wine when it comes into contact with the same.

A further important aim of the invention is to devise a stopper that permits adequate adhesion to the wall of the bottleneck.

A further aim of the invention is to produce a stopper for wine bottles that has a high impermeability to gases, in particular to oxygen, so that it can be used for ageing wines for periods exceeding 36 months.

A further aim of the invention is to devise a stopper that can guarantee uniform physical-mechanical characteristics.

Last but not least, a further aim of the invention is to produce a synthetic stopper for bottles of wine on which graphic elements and similar can be easily printed.

The technical aim and the tasks specified are achieved by a stopper for bottle for wine and similar drinks and by a process for the production of said stopper as claimed in the attached independent claims.

Preferred embodiments are highlighted in the sub-claims.

Further characteristics and advantages of the invention are better clarified below by the detailed description of a preferred embodiment of the invention, with reference to the attached drawings, in which:
**Fig. 1** shows an axonometric view of a stopper according to the invention;
**Fig. 2** illustrates the median section of the stopper according to the invention;
**Fig. 3a** schematises a first phase of a moulding process for production of said stopper;
**Fig. 3b** schematises a second phase of a moulding process; and
**Fig. 3c** schematises a third phase of a moulding process.

With reference to the above Figures, the stopper according to the invention is indicated overall by number **1**.

The stopper **1** is preferably a cylindrical stopper having rounded edges, which permit easier insertion into the bottleneck.

It comprises an outer coating **2**, having a thickness preferably between 0.3 mm and 2.0 mm, and an inner body **3** completely covered in the outer coating 2.

Said outer coating 2 and inner body 3 consist respectively of a first and a second polymeric material, respectively **2a** and **3a**.

Said polymeric materials 2a and 3a are different from each other and have different chemical-physical characteristics.

The coating 2, in fact, is the part of the stopper 1 that comes into direct contact with the wine and the walls of the bottleneck.

Consequently the coating 2 gives the stopper 1 the organoleptic characteristics that can alter or not the flavour and bouquet of the wine.

The coating 2 furthermore determines the degree of adhesion of the stopper 1 to the bottleneck.

Lastly, the coating 2 is the part of the stopper 1 directly seen by the consumer and therefore determines the appearance of the stopper 1.

The outer coating 2 consists of a first polymeric material 2a with the following characteristics: pleasant appearance and pleasant feel, easy to mould, possibility of lubrication in the contact area with the bottleneck, reduced absorption of liquids and aromas, non-toxicity and organoleptic neutrality.

The first polymeric material 2a that possesses the required characteristics will be specified subsequently, but in any case will be made of a thermoplastic polymeric material which is easily available also in the liquid state.

The inner body 3, on the other hand, substantially defines the mechanical characteristics of the stopper 1.

For said purpose the second polymeric material 3a used to produce the body 3 consists preferably of a foamed polymeric material.

Foamed polymeric materials have a high elasticity which is maintained in the long term, an adequate elastic modulus and ease of penetration, thus permitting extraction of the stopper 1 by means of a traditional corkscrew provided with a helical screw which is inserted into the stopper.

Originally, furthermore, the synthetic stopper 1 according to the invention is produced by means of a coinjection moulding process.

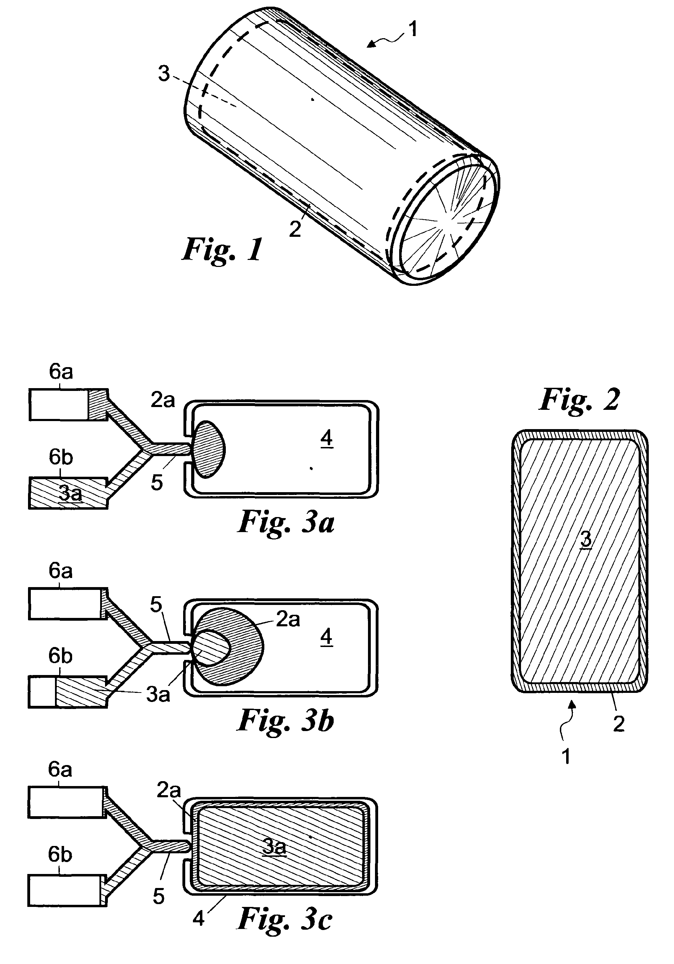

The coinjection moulding process, schematised in Fig. 3a, 3b and 3c, is a technique that consists in the substantially simultaneous injection of two polymeric materials, one external and one internal, in a liquid state into one single mould **4**.

Typically, two injection units **6a** and **6b** are connected preferably to one single nozzle **5**.

The external material is introduced into the mould 4 via the nozzle 5; the internal material is then immediately injected, preferably via the same nozzle 5, inside the external material, still in a liquid state.

As the internal material is injected, the mould 4 is filled and the external material is arranged on the surface of the object: thus constituting the surface coating of said object.

Once injection of the internal material into the mould 4 has been completed, a small amount of external material is injected into the injection area adjacent to the nozzle 5, so that the same entirely covers the internal material.

This provides optimal dimensional accuracy of the finished product, no need to re-machine the finished product after coinjection moulding and facilitates variation of the physical characteristics of the product, such as density and similar.

Due to said process it is furthermore possible to produce a synthetic stopper 1 in one single moulding operation, with different materials. Therefore the process permits considerable moulding speed and also considerable savings in production costs.

The coinjection moulding process nevertheless has the important drawback of requiring the injected materials to have specific characteristics.

Said materials must be chemically compatible in order to ensure good adhesion between them in the finished product.

In operational terms, it is necessary to use polymeric materials in a liquid state at similar temperatures and having a ratio between viscosities below a certain threshold value.

Said need derives from the tendency of the less viscous liquid material to incorporate the more viscous material, generating irregular surfaces and interfaces.

In particular, to determine the viscosity a viscosity index or MFI (melt flow index) is used, which is defined as the quantity of fluid in dg (decigrams) that flows in one minute through a capillary tube with diameter of 2.1 mm and length 8.0 mm under a pre-set load and a pre-set temperature.

Said loads and temperatures are established by specific technical regulations; MFI values obtained with loads of 2.16 kg and temperatures of 190°C are used below.

For optimal coinjection, the ratio between the MFI of the two polymeric materials, internal and external, must be below 2.5.

The viscosity of the external material must also be within lower and upper limits, both to ensure that the external material is sufficiently fluid, enabling it to extend to the dimensions of the mould 4 without incurring the risk of breaking and tearing, and to prevent the external material, being excessively fluid, enveloping the internal material too finely, resulting in irregular covering.

The requirements and characteristics already specified for the stopper 1 according to the invention therefore supplement those required to produce the stopper via said coinjection process.

In this case the external material consists of the first material 2a, while the internal material consists of the second material 3a.

As previously indicated, the internal body 3 of the stopper 1 must consist of a second foamed material 3a, but this peculiarity causes various problems in production by coinjection moulding.

In fact, the second material 3a present in the injection unit 6b, since it is a foamed material, contains a foaming gas in solution.

It is known that the presence of a foaming gas in solution in a polymeric material in a liquid state reduces the viscosity of the material.

Said second material 3a is injected through the nozzle 5 by means of high pressures and when the second material 3a enters the mould 4 it undergoes a sudden drop in pressure.

Consequently the gas present in solution is no longer in a state of equilibrium and flows out of the solution forming micro-cavities inside the material which rapidly expand, thus generating the cellular structure.

Due to outflow of the gas in solution, the viscosity of the second material 3a increases.

Said viscosity of the second material 3a can therefore take on, during the entire coinjection moulding process, incorrect values in relation to the viscosity of the first material 2a, as previously specified.

Therefore on the basis of the above considerations, for production of the stopper 1, a second material 3a, which is not excessively subject to variations in viscosity depending on the quantity of foaming gas dissolved in it, must be chosen for the body 3.

According to in-depth studies of the applicant it has been established that semi-crystalline polymers are subject to a sufficiently low variation in viscosity depending on the presence of dissolved gases.

Semi-crystalline polymers are polymers in which there is a partial ordering of some segments of the polymeric chains into crystalline lattices.

Said crystalline areas significantly affect the mechanical properties of the solid polymer such as rigidity, resistance, etc.

By raising the temperature, a value called melting point is reached in which the crystalline areas become flaky and the viscosity of the polymer, now in the liquid state, is rapidly reduced to values which can be very low, depending on the degree of mobility of the polymeric chains that constitute it.

In amorphous polymers, on the other hand, there are no crystalline areas and the transition from the solid state to the liquid state is not well defined and is much more gradual with a slow variation in viscosity; said viscosity must nevertheless have a high value to permit good mechanical qualities to be reached at the operating temperatures.

The presence of a gas in solution with the polymer acts as a "fluidifier" of the relative movement between the molecules. Therefore while in a semi-crystalline polymer it is possible to have low viscosity values in the liquid state so that an addition of gas in solution modifies the viscosity to a limited extent, in an amorphous polymer, which typically has a higher viscosity at the same temperatures, the addition of a gas in solution can significantly modify the mobility between the chains and therefore the viscosity.

A second important problem, linked to coinjection in which a foamed internal material 3a is used, is the following.

In a coinjection process in which both the materials are non-foamed, the filling speed and the filling pressure exerted by the internal material on the external material can be easily controlled by regulation of the injection system parameters. In said process the filling speed and pressure depend on the injection speed and pressure.

If the internal material is foamed, on the other hand, only the injection speed parameter can be controlled since the work process provides only for the injection of a known quantity of liquid polymer inside the mould.

The filling speed of the materials inside the mould is proportional to the injection speed.

The filling pressure, on the other hand, is not controllable since it is determined only by expansion of the gases present in solution, as previously described.

Since it cannot be arbitrarily defined, said pressure may not be high enough for production of the moulded object.

As is known, high expansion pressures are required for injection moulding of polymers with high viscosities.

High filling pressures are also necessary to mould at high speeds.

It was therefore decided to remove the critical aspect of said pressure, not pre-definable, using polymeric materials 2a and 3a with low or medium viscosity, which require lower pressures and permit a high injection speed and consequently a high productivity to be maintained.

In particular the materials 2a and 3a are preferably selected with MFI (Melt Flow Index, previously defined) values between 4 and 20 dg/min, at the characteristic working temperatures.

Therefore, to ensure the correct physical and mechanical characteristics mentioned, it is preferable for the second material 3a, which constitutes the internal body 3, to consist of ethylene- or propylene-based copolymers, or alternatively highly ramified polyolefins, polyurethane elastomers, polyester- or polyether-based elastomers.

Since the internal body 3 is not in direct contact with the food product and cannot be seen by the consumer, substances not organoleptically neutral or which could cause image problems or problems with adhesion of the graphic printing on the surface, but which considerably improve the performance required of the stopper, can be added to said internal body. The various possibilities include silicones with high molecular weight which permit improved sliding of the corkscrew inside the stopper, organic and inorganic fillers with low permeability to gases such as talcum or silicates, and in particular "oxygen scavenger" substances of known type: these are substances that absorb oxygen, they can be ions that neutralise the molecules of oxygen or other, and which consequently make the stopper impermeable to the penetration of oxygen from the outside.

The outer coating 2 consists preferably of highly ramified polyolefins or, alternatively, polyester- or polyether-based elastomers that ensure the correct chemical-physical characteristics previously listed.

In particular the MFI of these first polymeric materials 2a is in a correct ratio with the MFI of the second polymeric materials 3a listed, and is low enough to permit their use as external material in a coinjection process with a foamed internal material.

Said first polymeric materials 2a furthermore have the following characteristics: pleasant appearance and feel, ease of moulding, possibility of lubrication in the contact area with the bottleneck, reduced absorption of liquids and aromas, non-toxicity and organoleptic neutrality.

The invention has important advantages.

In particular the internal body 3 consisting of the materials specified provides the required characteristics of mechanical elasticity and ease of introduction and extraction of the corkscrew, uniform performance from stopper to stopper and, lastly, improvement of the characteristics of impermeability to gases.

The outer coating 2 consisting of the materials indicated permits the production of a stopper 1 with the required characteristics of: good adhesion to the bottleneck, long-term gas seal, no alteration of the organoleptic characteristics, flavours and bouquet of the wine, uniform performance from stopper to stopper, pleasant appearance, possibility of moulding and lubrication.

The coinjection moulding process also offers high production speeds, low costs, dimensional accuracy and secure cohesion between the outer coating 2 and the inner body 3, which constitute substantially one single piece.

The invention is subject to variations falling within the scope of the inventive concept.

In particular the stopper 1 can be used not only for wine but also for different drinks, for example liqueurs, sparkling wines and similar.

Lastly the stopper 1 can be not only cylindrical but also produced in other shapes.

## Claims

1. Stopper for bottle for wine and similar drinks comprising an outer coating (2) and an inner element (3), **characterised in that**: said outer coating (2) entirely covers said inner element (3) and is made of a first polymeric material (2a) of thermoplastic type, and said inner element (3) is made of a second foamed semi-crystalline polymeric material (3a), said materials permitting production of said synthetic stopper by means of coinjection moulding.

2. Stopper according to claim 1, in which said first polymeric material (2a) and said second polymeric material (3a) have an MFI between 4 and 20 dg/min when subjected to loads of 2.16 kg and temperatures of 190°C.

3. Stopper according to claim 2, in which said second polymeric material (3a) is chosen from: ethylene- or propylene-based copolymers, highly ramified polyolefins, polyurethane elastomers and polyester- or polyether-based elastomers.

4. Stopper according to claim 1, in which oxygen scavenger substances are added to said polymeric material (3a).

5. Stopper according to claim 1, in which silicones are added to said polymeric material (3a).

6. Stopper according to claim 1, in which fillers with low gas permeability are added to said polymeric material (3a).

7. Stopper according to claim 1, in which said first polymeric material (2a) is chosen from: highly ramified polyolefins and polyester- or polyether-based elastomers.

8. Stopper according to claim 1, in which said outer coating (2) has a thickness of between 0.3 mm and 2.0 mm.

9. Stopper according to claim 1, in which said second polymeric material (3a) consists of the foamed form of said first polymeric material (2a).

10. Process for the production of a synthetic stopper 1, **characterised in that** it consists of a coinjection moulding of a second foamed semi-crystalline polymeric material (3a) inside a different first polymeric material (2a) in a mould (4).

11. Process according to claim 10, in which said first polymeric material (2a) and said second polymeric material (3a) are selected from polymeric materials having an MFI of between 4 and 20 dg/min.

12. Process according to claim 11, in which said inner element (3) is chosen from polymeric material (3a) consisting of: ethylene- or propylene-based copolymers, highly ramified polyolefins, polyurethane elastomers and polyester- or polyether-based elastomers.

13. Process according to claim 10, in which oxygen scavenger substances are added to said second polymeric material (3a).

14. Process according to claim 10, in which silicones are added to said second polymeric material (3a).

15. Process according to claim 10, in which fillers with low gas permeability are added to said second polymeric material (3a).

16. Process according to claim 10, in which said outer coating (2) consists of a first polymeric material (2a) chosen from: highly ramified polyolefins and polyester- or polyether-based elastomers.

## Amended claims

### Amended claims in accordance with Rule 86(2) EPC.

**1.** Process for the production of a synthetic stopper 1, **characterised in that** it consists of a coinjection moulding of a second foamed semi-crystalline polymeric material (3a) inside a different first polymeric material (2a) in a mould (4).

**2.** Process according to claim 1, in which said first polymeric material (2a) and said second polymeric material (3a) are selected from polymeric materials having an MFI of between 4 and 20 dg/min.

**3.** Process according to claim 2, in which said inner element (3) is chosen from polymeric material (3a) consisting of: ethylene- or propylene-based copolymers, highly ramified polyolefins, polyurethane elastomers and polyester- or polyether-based elastomers.

**4.** Process according to claim 1, in which oxygen scavenger substances are added to said second polymeric material (3a).

**5.** Process according to claim 1, in which silicones are added to said second polymeric material (3a).

**6.** Process according to claim 1, in which fillers with low gas permeability are added to said second polymeric material (3a).

**7.** Process according to claim 1, in which said outer coating (2) consists of a first polymeric material (2a) chosen from: highly ramified polyolefins and polyester- or polyether-based elastomers.

**8.** Stopper for bottle for wine and similar drinks comprising an outer coating (2) and an inner element (3), said outer coating (2) entirely covering said inner element (3) and being made of a first polymeric material (2a) of thermoplastic type, and said inner element (3) being made of a second foamed semi-crystalline polymeric material (3a), **characterized in that** silicones are added to said polymeric material (3a) and said materials permitting production of said synthetic stopper by means of coinjection moulding.

**9.** Stopper according to claim 8, in which said first polymeric material (2a) and said second polymeric material (3a) have an MFI between 4 and 20 dg/min when subjected to loads of 2.16 kg and temperatures of 190°C.

**10.** Stopper according to claim 9, in which said second polymeric material (3a) is chosen from: ethylene- or propylene-based copolymers, highly ramified polyolefins, polyurethane elastomers and polyester- or polyether-based elastomers.

**11.** Stopper according to claim 8, in which oxygen scavenger substances are added to said second polymeric material (3a).

**12.** Stopper according to claim 8, in which fillers with low gas permeability are added to said second polymeric material (3a).

**13.** Stopper according to claim 8, in which said first polymeric material (2a) is chosen from: highly ramified polyolefins and polyester- or polyether-based elastomers.

**14.** Stopper according to claim 8, in which said outer coating (2) has a thickness of between 0.3 mm and 2.0 mm.

**15.** Stopper according to claim 8, in which said second polymeric material (3a) consists of the foamed form of said first polymeric material (2a).
